# EUROPEAN PATENT APPLICATION

(11) **EP 1 772 444 A1**
(43) Date of publication of application: **11.04.2007**
(21) Application number: 05077301.9
(22) Date of filing: 10.10.2005
(51) Int. Cl.: C05B 15/00, C05D 9/00, C05D 3/02, C05D 5/00, C05F 5/00, C05G 3/00, C05C 1/02

(54) **Stabilized filler and fertilizer containing same**

(71) Applicant: Solutia Europe N.V./S.A., 1050 Brussels (BE)
(72) Inventor: Laurent, Bernard G., 5170 Lustin (BE)
(74) Representative: Colens, Alain M.G.M.

(57) **Abstract**

A filler, suitable for use in a fertilizer, is disclosed containing an inorganic component and a low level of a phosphonic, preferably a polyphosphonic, acid compatibilizing agent. Also disclosed are granular ammonium nitrate fertilizers containing the filler compositions herein. The inorganic component can be represented by known species including limestone and dolomite.

## Description

This invention relates to fillers, suitable for use in fertilizers, exhibiting reduced reactivity and enhanced stability in relation to active co-ingredients e.g. in a composition ready for use. In more detail, the fillers herein contain major levels of an inorganic component in combination with a low level of a compatibilizing agent selected from the group of organic polyphosphonic acid and organic phosphonic acid attached to a hydrocarbon backbone containing a moiety selected from sulfonic acid and carboxylic acid and combinations thereof. In preferred aspects, this invention concerns a fertilizer containing the essential filler embodiment, containing an inorganic component and a sub-additive level of narrowly defined compatibilizing agent in combination with ammonium nitrate (AN).

Fertilizers on the basis of ammonium nitrate are well-known and have been used for a long time. Such ammonium nitrates are usually processed with an inorganic filler such as limestone or dolomite to thus yield granular products. This can lead to the formation of calcium nitrate, a hygroscopic component, which increases the moisture pick-up of the fertilizer product during storage and accordingly crust/dust formation and caking of the fertilizer product. The formation of calcium nitrate can be accompanied by the release of carbon dioxide and ammonium gases that, in turn, can be entrapped, during the crystallization of the granulated product from the slurry, in the granulated fertilizer products. The like granules exhibit reduced density and reduced hardness that can lead to increased dust formation, abrasion tendency and caking. It is also well known that the like ammonium nitrate/limestone interactions can take place during the scrubbing of gases originating from the fertilizer manufacturing. The dust collected during the scrubbing contains primarily ammonium nitrate and filler particles. Due to the fact that the scrubbing liquid is usually slightly acidic, the formation of hygroscopic calcium nitrate, which is recycled into the fertilizer, is enhanced.

The fertilizer art is, as one can expect, very substantial especially in relation to ammonium nitrate based fertilizers. French patent 1.515.488 discloses a process for the manufacture of ammonium nitrate particles with reduced levels of dust/fines. Ammonium nitrate particles are prepared by crystallization of the nitrate in the presence of boric acid or an alkali or ammonium salt thereof to thus substantially reduce the tendency of the ammonium nitrate to be subject to undergo conversion to a less stable crystalline state. Comparable teachings can be found in "Nitrogen, N° 59, May/June 1969, p. 46/47". The boric acid reagent is, together with ammonium phosphate and ammonium sulfate, present in an additive commercially available under the trade name "Permalene-34".

The physical deficiencies of ammonium nitrate fertilizers are abundantly illustrated in the art and multiple proposals for improvement are recorded in the relevant literature. A fairly cumbersome proposal for improving the scrubbing in the manufacture of ammonium nitrate is known from US patent 3,690,820. A method for improving pollution control, attached to the manufacture of ammonium nitrate, is known from US patent 3,985,523. Methods for improving the granulation of ammonium nitrate and reducing physical deficiencies of the like solid fertilizer particles are known from: US patent 3,779,821; US patent 3,952,078; US patent 3,419,379; US patent 3,428,418; US patent 3,630,712 and US patent 3,649,173. Notwithstanding the considerable R&D resources invested in this domain, ammonium nitrate fertilizers remain subject to considerable physical and stability deficiencies which affect the economics of the technology and its suitability for controllable commercial use.

It is therefore a major object of this invention to provide inorganic fillers having a reduced and controllable reactivity, particularly in relation to fertilizers based on ammonium nitrate, to thus reduce foam formation upon admixture of ammonium nitrate with the filler. It is another object of this invention to provide a fertilizer having a relatively high density and a reduced tendency for dust formation. Yet another object of this invention concerns the manufacture of fertilizers, particularly ammonium nitrate fertilizers, having a significantly reduced hygroscopic tendency. Another major object of this invention concerns a fertilizer manufacturing arrangement capable of yielding granular products that are not subject to any substantial physical deficiency including reduced density, dust formation and/or hygroscopicity. Still another object of this invention concerns reducing the load on the manufacturing scrubbing section to thus significantly reduce ammonia emission to the atmosphere. A further object of the invention concerns a provision of high-density ammonium nitrate fertilizers to thus provide additional detonability safeguards and reduced handling costs.

The foregoing and other objects can now be met by means of solid fillers containing a major amount of inorganic components in combination with a compatibilizing agent selected from the group of an organic polyphosphonic acid or a mixed organic phosphonic acid attached to a hydrocarbon backbone containing a moiety selected from sulfonic acid and carboxylic acid and combinations thereof. Other objects are met by a provision of stabilized ammonium nitrate fertilizers, having desirably improved physical properties, containing ammonium nitrate in admixture with the fillers of this invention.

The terms "%" or "percent", as used in the description and in the Examples, stand, unless defined differently, for "% by weight" or "percent by weight". The term phosphonic acid stands for the acid as such or in partially or fully neutralized forms. The levels of the phosphonic acid are defined as "active acid compounds".

It has now been discovered that fillers, suitable for use in fertilizers, and particularly ammonium nitrate fertilizers containing such fillers can be formulated. In more detail, the fillers of this invention consist essentially of a mixture of an inorganic component and a compatibilizing agent selected from the group of an organic polyphosphonic acid and an organic phosphonic acid attached to a hydrocarbon backbone containing a moiety selected from sulfonic acid and carboxylic acid and combinations thereof, said compatibilizing agent being present in a level of from 0.001 to 2 %. Preferred compatibilizing agents can be selected from: (a) an aminoalkylene polyphosphonic acid wherein the alkylene moiety contains from 1 to 20 carbon atoms; (b) a hydroxyalkylene polyphosphonic acid wherein the alkylene moiety contains from 2 to 50 carbon atoms; and (c) a phosphono-alkane-polycarboxylic acid wherein the alkane moiety is a straight chain configuration containing from 3 to 12 carbon atoms.

In another preferred execution, major levels of the fillers of this invention are used in a fertilizer containing ammonium nitrate.

A first essential component of the inventive filler is represented by an inorganic component, suitable for use in fertilizers. Such inorganic filler materials are eminently well known in the domain of the technology and have been used extensively for a long time e.g. in solid fertilizers. As such all inorganic fillers known in the art can be used. Examples of suitable inorganic species include limestone, dolomite, magnesium carbonate, magnesium oxide, calcium oxide, calcium hydroxide, magnesium hydroxide, magnesium sulfate including calcined and hydrated species (kieserite, epsomite), clays including illite, bentonite, sepiolite, biotite, smectite, atapulgite, calcium sulfate anhydrate, calcium sulfate hemi-hydrate and calcium sulfate di-hydrate and mixtures of such inorganic species. Limestone and dolomite are for practical reasons, including availability, economics and safety, especially preferred. Suitable limestone species can be from natural or synthetic origin. Natural limestones are nowadays preferred because of their lower surface reactivity. Synthetic limestones can be prepared by means of the nitrophosphate process (also known as the Odda process). That process involves acidifying phosphate rock with nitric acid to thus produce a mixture of phosphoric acid and calcium nitrate. The reaction mixture is cooled to e.g. around 0 °C at which temperature the calcium nitrate crystallizes and can be separated from the phosphoric acid. The calcium nitrate is then converted into ammonium nitrate thereby using carbon dioxide and ammonia. Limestone so prepared has a surface reactivity that is much greater than the surface reactivity of natural limestones of corresponding particle diameters. Synthetic limestones were, in one preparational execution, found to have a mean particle diameter around 60-80 µm. Such synthetic limestones onto which a compatibilizing agent in accordance with this invention has been applied were found to yield, upon use in an AN fertilizer matrix, a granular fertilizer exhibiting improved physical properties, in particular high density and high hardness and a significantly reduced hygroscopicity as compared to AN fertilizers prepared from natural limestones of corresponding particle diameter.

The inorganic components can, as such or in admixtures with conventional additives, be used with a very low level of selected compatibilizing agents to thus generate storage stability and other desirable benefits particularly upon use in an ammonium nitrate fertilizer matrix. The particle size of the inorganic component, such as limestone, is generally small to thus secure the formation of round particles e.g. upon use in a fertilizer granulation. It was found that inorganic compounds having a particle size distribution such that 90 % of the particles have a diameter below 150 µm (microns), preferably below 100 µm, most preferably below 30 µm, will yield, within the fertilizer context of this invention, particles having fairly non-reactive surfaces so that consequently no more than nominal levels, as illustrated in the examples, of calcium nitrate are formed.

The inorganic component is used, in the filler embodiment of this invention, in major levels, actually, and in the absence of conventional additives, as the sole ingredient to which sub-additive levels of the compatibilizing agent, levelwise expressed in relation to the inorganic component (100 %), are added. Conventional additives can optionally be used in the fillers herein in art established levels for their art established functionality. Such additives can be used broadly in cumulative levels below 10 %, preferably from 0.5 to 5 %, usually up to 3 %. Examples of suitable additives include ammonium sulfate, aluminum sulfate, potassium nitrate, lignosulfonates, sulfuric acid, vinasses, surface-active agents and crystal habit modifiers e.g. alkyl sulfonates. Additives for finishing/coating the fertilizer can also be used; examples of such additives include oil and talcum which coating additives can be used in individual levels of 0.1 to 0.5 %.

The fertilizer embodiment of this invention comprises from 99.5 to 0.5 % of ammonium nitrate and from 0.5 to 99.5 % of the filler. As is well known, ammonium nitrate is used in fertilizers in varying levels. Examples of codified ammonium nitrate grades in fertilizers are: AN 33.5; CAN 27; CAN 26; CAN 20; and CAN 10 containing respectively around 96 %, 77 %, 74 %, 57 % and 29 % of ammonium nitrate. In the like fertilizers, the ammonium nitrate primary nutrient can be complemented by other nitrogen (N), nitrogen-phosphorous (NP), nitrogen-potassium (NK) and nitrogen-phosphorous-potassium (NPK) primary nutrients. Examples of such (non-AN) primary nutrients are phosphate rocks e.g. fluoro-apatite, ammonium phosphates e.g. mono- and di-ammonium phosphates and potassium salts such as potassium chloride and potassium sulfate. Accordingly, the AN level can primarily vary depending upon the application selectivity of the fertilizer. The filler is, in straight ammonium nitrate based fertilizers, preferably used in levels of from 0.5 to 70 %, the ammonium nitrate level in such straight fertilizers is generally in the range of from 30 to 97 %.

The compatibiling agent is selected from the group of an organic polyphosphonic acid and an organic phosphonic acid attached to a hydrocarbon backbone containing a moiety selected from sulfonic acid and carboxylic acid and combinations thereof. A preferred compatibilizing agent is selected from the group of: (a) aminoalkylene polyphosphonic acids wherein the alkylene moiety contains from 1 to 20 carbon atoms; (b) hydroxyalkylene polyphosphonic acids wherein the alkylene moiety contains from 2 to 50 carbon atoms; and (c) phosphono-alkane-polycarboxylic acids wherein the alkane moiety is a straight chain configuration containing from 3 to 12 carbon atoms. Actually preferred: aminoalkylene polyphosphonic acids have from 1 to 12 carbon atoms in the alkylene moiety; hydroxyalkylene phosphonic acids contain from 2 to 12 carbon atoms in the alkylene moiety and two phosphonic acid groups; whereas phosphono-alkane-polycarboxylic acids have a straight chain alkane configuration having from 4 to 8 carbon atoms and wherein the molar ratio of phosphonic acid radical to carboxylic acid radical is in the range of from 1 : 2 to 1 : 4. Preferred compatibilizing agents are polyphosphonic acids having from 2 to 8, more preferably from 2 to 6 phosphonic acid groups. Particularly preferred compatibilizing agents were found to include the following species: aminotrimethylene phosphonic acid and its N-oxide; 1-hydroxyethylene(1,1-diphosphonic acid); ethylenediamine tetra(methylenephosphonic acid); and hexamethylene diamine tetra(methylenephosphonic acid).

The compatibilizing agent can broadly be used in a level of from 0.001 to 2 % expressed in relation to the inorganic component (100 %); preferred ranges are of from 0.01 to 1%, more preferably of from 0.01 to 0.4 %, in some preferred executions of from 0.01 to 0.2 %.

The compatibilizing agent can be incorporated into/admixed to the inorganic component to thus generate the filler not later then/simultaneously with the addition of the ammonium nitrate. The compatibilizing agent can be combined with the inorganic component as a liquid solution, having a neutral to alkaline pH, or as a finely divided powder. This can require a mixer followed by a reactor for the addition of AN to the filler. In another approach, the compatibilizing agent shall be added to a hot ammonium nitrate (AN) solution prior to the addition of the inorganic component. In yet another approach, the compatibilizing agent can gradually be added (dosed) in the scrubbing section to thus yield a slurry containing said agent, AN and the inorganic component. This slurry is continuously recycled into the fertilizer process. In still another approach, the compatibilizing agent can be added, preferably in liquid solution, together with the ammonium nitrate and the inorganic component, into the granulator. The unusual benefits attached to the inventive technology are illustrated by means of comparative tests as follows.

### Examples 1-9.

A fertilizer matrix was prepared containing the following ingredients.

| Ingredient | kg/mt (**) |
|---|---|
| Ammonium nitrate | 771.0 |
| Limestone (*) | 229.0 |
| Water | 50.0 |
| Phosphonic acid (***) | 0/0.1/0.29 |

| | |
|---|---|
| (*) precipitated limestone 90 % of the particles of which have a diameter below 10 µm. (**) defines the mixture of AN and inorganic component. mt means metric ton (***) added as an, at least partially neutralized, alkali salt having a pH greater than 7. | |

The ammonium nitrate (AN) was melted at 145 °C in the presence of the water. The phosphonic acid was then added to the AN solution immediately followed by the addition, under continuous stirring, of the limestone to thus yield a slurry commonly known as CAN 27% slurry. The AN solution had a pH, measured at 10 % in water at ambient temperature (20 °C), in the range of from 6.0 to 6.5.

Samples of the slurry so prepared were taken at regular intervals and were, after cooling to ambient temperature (20 °C), analyzed for calcium nitrate content thereby using the following method. Calcium nitrate is extracted from the cooled slurry with the aid of anhydrous methanol. The methanol/slurry mixture is stirred at ambient temperature during one hour to thus extract the calcium nitrate, but not the limestone, and thereafter filtered. The methanol in the filtrate is evaporated or burned. The remaining solid containing the calcium nitrate is dissolved in demineralized water, the calcium content is determined by conventional analysis and expressed as calcium nitrate. The calcium nitrate level is proportional to the levels of non-desirable by-products such as carbon dioxide and ammonia. The phosphonic acid used in Examples 1-9 was aminotrimethylene phosphonic acid. The test results were as follows.

| Example N° | Phosphonic acid kg/mt | Sampling Time Minutes | % Ca(NO₃)₂ |
|---|---|---|---|
| 1 | 0 | 5 | 2.05 |
| 2 | 0 | 15 | 3.05 |
| 3 | 0 | 30 | 4.36 |
| 4 | 0.1 | 5 | 0.83 |
| 5 | 0.1 | 15 | 1.22 |
| 6 | 0.1 | 30 | 1.83 |
| 7 | 0.29 | 5 | 0.12 |
| 8 | 0.29 | 15 | 0.33 |
| 9 | 0.29 | 30 | 0.38 |

These data illustrate the three to ten fold reduction in calcium nitrate by-product formation in the presence of very low levels of the phosphonic acid compatibilizing agent.

Additional experimental data in accordance with the invention herein, using a variety of phosphonic acid compatibilizing agents, were generated and evaluated thereby using the method of Examples 1-9.

| Example N° | Phosphonic Acid Species | kg/mt |
|---|---|---|
| 10-12 | None | 0.00 |
| 13-15 | Aminotrimethylene phosphonic acid | 0.29 |
| 16-18 | 1-Hydroxyethylene (1,1-diphosphonic acid) | 0.21 |
| 19-21 | Ethylenediamine (tetra methylene phosphonic acid) | 0.25 |
| 22-24 | Hexamethylene diamine (tetramethylene phosphonic acid) | 0.23 |
| 25-27 | Diethylenetriamine penta (methylene phosphonic acid) | 0.25 |
| 28 | N,N'-bis-(3-aminopropyl ethylenediamine hexa methylene phosphonic acid | 0.30 |
| 29-30 | Bishexamethylene triamine penta(methylene phosphonic acid) | 0.37 |
| 31-33 | N-oxide aminotrimethylene phosphonic acid | 0.41 |
| 34-36 | 2-Phosphono-1,2,4-butane tricarboxylic acid. | 0.34 |

The testing data were as follows.

| Example N° | Minutes | %-Ca(NO₃)₂ |
|---|---|---|
| 10 | 5 | 2.50 |
| 11 | 15 | 3.44 |
| 12 | 30 | 5.18 |
| 13 | 5 | 0.18 |
| 14 | 15 | 0.23 |
| 15 | 30 | 0.33 |
| 16 | 5 | 0.27 |
| 17 | 15 | 0.37 |
| 18 | 30 | 0.50 |
| 19 | 5 | 0.28 |
| 20 | 15 | 0.50 |
| 21 | 30 | 0.57 |
| 22 | 5 | 0.24 |
| 23 | 15 | 0.37 |
| 24 | 30 | 0.47 |
| 25 | 5 | 0.34 |
| 26 | 15 | 0.54 |
| 27 | 35 | 1.00 |
| 28 | 5 | 0.65 |
| 29 | 5 | 0.14 |
| 30 | 30 | 0.76 |
| 31 | 5 | 0.22 |
| 32 | 15 | 0.55 |
| 33 | 30 | 0.37 |
| 34 | 5 | 0.94 |
| 35 | 15 | 1.27 |
| 36 | 30 | 1.62 |

These data demonstrate, in particular, the unusual performance benefits derivable from the addition of very low, sub-additive, levels of selected phosphonic acids to the inorganic component. These benefits, inter alia significantly reduced surface reactivity of the filler, are illustrated by means of a decrease in the level of calcium nitrate formation resulting from the addition of the filler containing the compatibilizing agent. The formation of calcium nitrate can also be inhibited in mixtures of other (non ammonium) nitrate salts, e.g. potassium nitrate, and the inorganic filler in the presence of low levels of the compatibilizing agent in accordance with this invention.

Additional comparative tests were run to show, in particular, the significance of the very low level of the compatibilizing agent.

A fertilizer matrix was prepared containing the listed ingredients in the stated proportions.

| Ingredient | kg/mt |
|---|---|
| Ammonium nitrate | 957.0 |
| Limestone | 43.0 |
| Water | 50 |

Aminotrimethylene phosphonic acid 0/0.1/0.29/1.45 (*), (**), (***) are as defined in Examples 1-9.

The fertilizer compositions, commonly known as AN 33.5 slurry, were evaluated thereby using the method of Examples 1-9.

| Example N° | Phosphonic acid kg/mt |
|---|---|
| 37-39 | 0.00 |
| 40-42 | 0.10 |
| 43-45 | 0.29 |
| 46-48 | 1.45 |

The test results were as follows:

| Example N° | Sampling time minutes | % Ca (NO₃)₂ |
|---|---|---|
| 37 | 5 | 1.19 |
| 38 | 15 | 1.49 |
| 39 | 30 | 1.74 |
| 40 | 5 | 0.04 |
| 41 | 15 | 0.13 |
| 42 | 30 | 0.17 |
| 43 | 5 | 0.07 |
| 44 | 15 | 0.06 |
| 45 | 30 | 0.07 |
| 46 | 5 | 0.00 |
| 47 | 15 | 0.00 |
| 48 | 30 | 0.00 |

These examples, particularly 46-48, illustrate the inventive benefits, namely very low levels of selected polyphosphonic acid yield exceptional stability benefits.

## Claims

1. A filler, suitable for use in a fertilizer, consisting essentially of a mixture of an inorganic component and a compatibilizing agent selected from the group of an organic polyphosphonic acid and an organic phosphonic acid attached to a hydrocarbon backbone containing a moiety selected from sulfonic acid and carboxylic acid and combinations thereof, said compatibilizing agent being present in a level of from 0.001 to 2 % by weight expressed in relation to the level of the inorganic component (100 %).

2. The filler in accordance with Claim 1 wherein the compatibilizing agent is selected from the group of:
(a) an aminoalkylene polyphosphonic acid wherein the alylene moiety contains from 1 to 20 carbon atoms;
(b) a hydroxyalkylene polyphosphonic acid wherein the alkylene moiety contains from 2 to 50 carbon atoms; and
(c) a phosphono-alkane-polycarboxylic acid wherein the alkane moiety is a straight chain configuration containing from 3 to 12 carbon atoms.

3. The filler in accordance with Claim 1 wherein the compatibilizing agent is present in a level of from 0.01 to 1 % by weight.

4. The filler in accordance with Claim 1 wherein the inorganic component is selected from the group of limestone, dolomite, magnesium carbonate, magnesium oxide, calcium oxide, calcium hydroxide, magnesium hydroxide, magnesium sulfate including calcined and hydrated species (kieserite, epsomite) clays including illite, bentonite, sepiolite, biotite, smectite, atapulgite, calcium sulfate anhydrate, calcium sulfate hemi-hydrate and di-hydrate and mixtures thereof.

5. The filler in accordance with Claim 1 wherein the compatibilizing agent is selected from the group of: an aminoalkylene polyphosphonic acid having from 1 to 12 carbon atoms in the alkylene moiety; a hydroxyalkylene polyphosphonic acid having from 2 to 12 carbon atoms in the alkylene moiety and containing two phosphonic acid radicals; and a phosphono-alkane-polycarboxylic acid wherein the alkane moiety is a straight chain configuration having from 4 to 8 carbon atoms and wherein the molar ratio of phosphonic acid radical to carboxylic acid radical is in the range of from 1 : 2 to 1 : 4.

6. The filler in accordance with Claims 1 and 5 wherein the compatibilizing agent is used in a level of from 0.01 to 0.2 % by weight.

7. The filler in accordance with Claim 1 wherein the inorganic component is represented by a synthetic limestone having a particle diameter in the range of from 60-80 µm.

8. A fertilizer composition comprising of from:
(i) 99.5 to 0.5 % by weight of ammonium nitrate; and from
(ii) 0.5 to 99.5 % by weight of the filler in accordance with Claim 1.

9. The fertilizer in accordance with Claim 8 wherein the inorganic component is selected from the group of limestone, dolomite, magnesium sulfate including calcined and hydrated species (kieserite, epsomite) clays including illite, bentonite, sepiolite, biotite, smectite, atapulgite, calcium sulfate anhydride, calcium sulfate hemi-hydrate and di-hydrate, and mixtures thereof and wherein the compatibilizing agent is present in a level of from 0.01 to 1 % by weight.

10. The fertilizer in accordance with Claim 8 wherein the ammonium nitrate is present in a level of from 30 to 97 % by weight and the filler represents from 0.5 to 70 % by weight.

11. The fertilizer in accordance with Claim 8 containing, in addition, one or more additives selected from the group of ammonium sulfate, aluminum sulfate, potassium nitrate, lignosulfonates, sulfuric acid, vinasses, surface-active agents, alkyl sulfonates, oil, talcum and mixtures thereof.

12. The fertilizer in accordance with Claim 8 wherein the inorganic component is selected from dolomite, natural limestone and synthetic limestone.

13. The fertilizer in accordance with Claim 8 wherein the compatibilizing agent is selected from: aminotrimethylene phosphonic acid and the N-oxide thereof; 1-hydroxyethylene (1,1-diphosphonic acid); ethylenediamine tetramethylenephosphonic acid; hexamethylene diamine tetramethylenephosphonic acid; and mixtures thereof.
